# EUROPEAN PATENT APPLICATION

(11) **EP 4 733 102 A1**
(43) Date of publication of application: **29.04.2026**
(21) Application number: 25210684.4
(22) Date of filing: 23.10.2025
(51) Int. Cl.: B60K 1/02, B60L 15/20, B60L 15/32, B60K 17/04, B60K 1/00, F16H 1/06, F16H 1/46, F16H 37/08, F16H 48/08

(54) **TRACTION ASSEMBLY FOR A VEHICLE**

(30) Priority: 25.10.2024 IT 202400023907
(71) Applicant: IVECO S.P.A., 10156 Torino (IT)
(72) Inventor: BOSIA, Giorgio, 10156 Torino (IT); MANTOVANI, Giorgio, 10156 Torino (IT); BERNARDINI, Alessandro, 10156 Torino (IT); PEREIRA DE LEMOS, Jose' Francivaldo, 10156 Torino (IT)
(74) Representative: Studio Torta S.p.A.

(57) **Abstract**

Traction assembly (1) for a vehicle comprising a left and right drive-shaft (2, 3) extending along a longitudinal axis (A) and defining an external end configured to be connected to a wheel hub (2a, 3a) of the vehicle,
the traction assembly (1) comprising at least a first and a second electric machine (M', M") and a casing (7) defining a housing (8) and a transmission (6) housed in said housing (8), the first electric machine (4) being a synchronous electric machine and the second electric machine (5) being an asynchronous electric machine,
at least one of the first and second electric machines (M', M") is housed in said housing (8).

## Description

### CROSS-REFERENCE TO RELATED APPLICATIONS

This patent application claims priority from Italian patent application no. 102024000023907 filed on October 25, 2024, the entire disclosure of which is incorporated herein by reference.

### TECHNICAL FIELD

The invention relates to a vehicle traction assembly, more in particular to an electric traction assembly for a commercial vehicle.

### KNOWN STATE OF THE ART

The ecological transition increasingly requires the use of electric motors to help or replace internal combustion engines for vehicular transport purposes.

To this end, it is known to provide traction assemblies configured to provide torque to the wheels of a vehicle while comprising a power take-off configured to be connected to an output shaft of an internal combustion engine and one or more electric motors configured to cooperate with or replace said internal combustion engine.

It is required that these traction assemblies are compact and versatile, that is, that they do not excessively increase the dimensions and weight of the vehicle but are able to provide various functional configurations.

This demand is all the more felt in commercial vehicles where it is necessary to be able to provide torque to the wheels according to the different operational needs of the vehicle.

An example of a traction assembly is shown in WO2023073632 A1. However, in this example of prior-art traction there are problems due to the presence of electric machines.

In fact, electric machines, as it is known, have the dual function of an electric motor, using electrical energy to provide driving torque, or of an electric generator, absorbing driving torque to generate electrical energy.

In order not to be affected by the passive load due to the generative function, in known traction assemblies, like the one disclosed in the aforementioned document, it is known to provide means to allow for the selective mechanical connection between the electric machines and the drive-shafts.

In this way, the torque flow is directed so as to be optimized depending on the traction or energy generation function required by the vehicular mission.

However, clearly, these selective mechanical connection means are complex, bulky, expensive and need pneumatic or hydraulic actuation systems, which further weigh down and make the manufacture of the traction assembly expensive and complex.

To this end, solutions are known, as in DE102018210897 A1, which discloses the use of a synchronous machine and an asynchronous machine in order to electrically "disconnect" it, thus preventing the passive load thereof from being felt by the transmission with consequent loss of efficiency.

However, the solution disclosed in DE102018210897 A1 is not optimized to allow for torque transmission over a wide operating range.

Therefore, there is a need to provide traction assemblies that are versatile and compact.

The object of the invention is to fulfil the needs discussed above in an economic and optimized fashion.

### SUMMARY OF THE INVENTION

The aforesaid object is reached by a traction assembly and by a vehicle as claimed in the appended claims.

### BRIEF DESCRIPTION OF THE DRAWINGS

The invention will be best understood upon perusal of the following detailed description of a preferred embodiment, which is provided by way of non-limiting example, with reference to the accompanying drawings, wherein:
- Figure 1 shows a schematic side view of a traction assembly according to a first embodiment of the invention;
- Figure 1A shows different operating conditions of the traction system of figure 1, in which the torque transmission lines are schematically indicated;
- Figure 2 shows a schematic side view of a traction assembly according to a second embodiment of the invention; and
- Figure 2A shows different operating conditions of the traction system of figure 2, in which the torque transmission lines are schematically indicated.

### DETAILED DESCRIPTION OF THE INVENTION

In the attached figures, reference number 1 indicates a traction assembly according to the invention, which is configured to transmit torque to respective drive-shafts 2, 3, a left and right drive-shaft respectively, which extend along a longitudinal axis A.

Said traction assembly 1 is part of an at least partially, and preferably purely, electric-drive vehicle.

Each drive-shaft 2, 3 is configured to drive a wheel hub 2a, 3a, which is fixed to an external end 2', 3' of the respective drive-shaft 2, 3, which is configured to be integral to a wheel assembly that is not shown herein.

In particular, the traction assembly 1 is configured to supply torque to the drive-shafts 2, 3 by means of at least one pair of electric machines M', M'', each configured to act as an electric motor, i.e. to provide torque by using electrical energy, for example supplied by a vehicular battery assembly (not shown), or to absorb torque to generate electrical energy to be supplied to said vehicular battery assembly.

This electrical connection is schematically shown by the dashed arrows of the attached drawings representing the electrical connection to the aforementioned battery assembly and to an electronic control unit of the vehicle.

In the example shown herein, the traction assembly 1 comprises a pair of electric machines M', M'', whose respective operating shaft 4, 5 is parallel to a longitudinal axis A of the drive-shafts 2, 3 which are coaxial to one another.

The traction assembly 1 comprises a transmission 6 operatively interposed between the left and right drive-shafts 2, 3 and the pair of electric machines M', M' ' and configured to allow torque to be transmitted from at least one of the electric machines M', M'' to the drive-shafts 2, 3.

Advantageously, the traction assembly 1 comprises a casing 7 configured to delimit a space 8 isolated from the outside; the space 8 is configured to house the transmission 6 as described below. The casing 7 preferably comprises a central portion 7a and a pair of side portions 7b located in the area of the drive-shafts 2, 3.

In both embodiments, the transmission 6 comprises a differential mechanism 10 configured to connect, in a known manner, the two drive-shafts 2, 3, in particular at an internal end 2", 3'' thereof opposite the respective external ends 2', 3' along the longitudinal axis A.

The wheel hubs 2a, 3a can be connected to the respective drive-shaft 2, 3 by means of a gearing 11, 12 configured to vary the speed/torque transmitted between the drive-shaft 2, 3 and the respective wheel hub 2a, 3a.

In the embodiment shown herein, these gearings 11, 12 are planetary/epicyclic gearings, where the drive-shaft represents the sun gear and the hub rotates the crown and a plurality of satellites are operatively interposed, as it is known per se and not described for the sake of brevity.

In particular, the first electric machine M' is a synchronous electric machine while the second electric machine M'' is an asynchronous electric machine, in particular the first electric machine M' is a permanent magnet electric machine while the second electric machine M" is an induction electric machine.

Consequently, the vehicular electric unit is configured to control the power supply of the second electric machine M'' so as to selectively interrupt it in order to selectively "disconnect" the latter from the transmission 6.

According to the invention, at least one of the first and second electric machines M', M'' is housed within the space 8.

In detail, said electric machine housed in the space 8 is coaxial to the axis A and housed coaxial to one of the drive-shafts 2, 3.

In the embodiment shown herein, said electric machine is the second electric machine M'', i.e. the asynchronous electric machine; again, in the exemplary embodiment, it is preferably carried by the left drive-shaft 2.

Advantageously, the transmission 6 comprises two branches 14, 15 connecting, in parallel, each electric machine M', M'' to the differential 10, in particular to the train carrier thereof.

In the embodiment shown herein, the first branch 14 comprises a parallel shafts gearing connecting the first electric machine M' to the differential 10. In particular, the first branch 14 comprises a first gear wheel 14' carried by the operating shaft 4 and a second gear wheel 14'' directly carried by the train carrier of the differential 10.

In the embodiment shown herein, again, the operating shaft 5 of the second electric machine M'' is hollow and coaxial to the drive-shaft 2 and the second branch 15 comprises an epicyclic mechanism.

In particular, the epicyclic mechanism 15 is of the compound type, i.e. it comprises a first and a second epicyclic gearing 15', 15" in series to one another and interposed between the operating shaft 5 and the differential 10.

In detail, the first and second epicyclic gearing 15', 15'' respectively comprise a first and a second crown 17', 17'', a first and a second sun gear 18', 18'', a plurality of first and second satellites 19', 19'' meshing between the respective crowns 17', 17'' and the respective sun gears 18', 18'' and respective first and second pins 21', 21',' around which the first and second satellites 19', 19'' rotate.

In the embodiment described herein, the first sun gear 18' is integral to the operating shaft 5, i.e. driven by the second electric machine M'', while the first crown 17' is integral to the casing 7. The first pins 21' are integral to the second sun gear 18',' which is carried in a rotary manner with respect to the drive-shaft 2, and, advantageously, the second crown 17'' is integral to the first crown 17'. The second pins 21'' are operatively connected to the differential 10, in detail to the train carrier thereof.

Advantageously, the casing 7 comprises a conditioning system 23 configured to cool the stator of the electric machine M'' housed in the space 8. Advantageously, said conditioning system is a fluid conditioning system and, even more advantageously, it is integrated in the casing 7, in detail in the central part 7a thereof, which houses the second electric machine M''.

As shown in the accompanying figures, the conditioning system comprises a plurality of ducts 24, in which a conditioning fluid flows. Advantageously, these ducts 24 are integrated, as mentioned above, in the casing 7.

The ducts 24 are connected to respective delivery and return ducts (not shown) configured to permit the recirculation of the fluid with a heat exchanger (not shown) of the vehicle designed to enable the necessary exchange of heat and not further described for the sake of brevity.

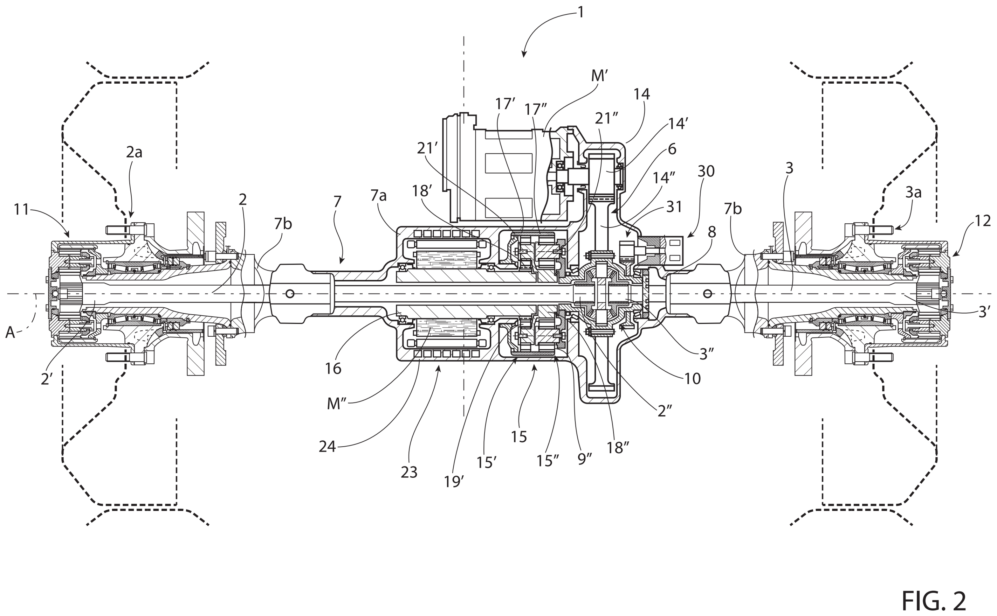

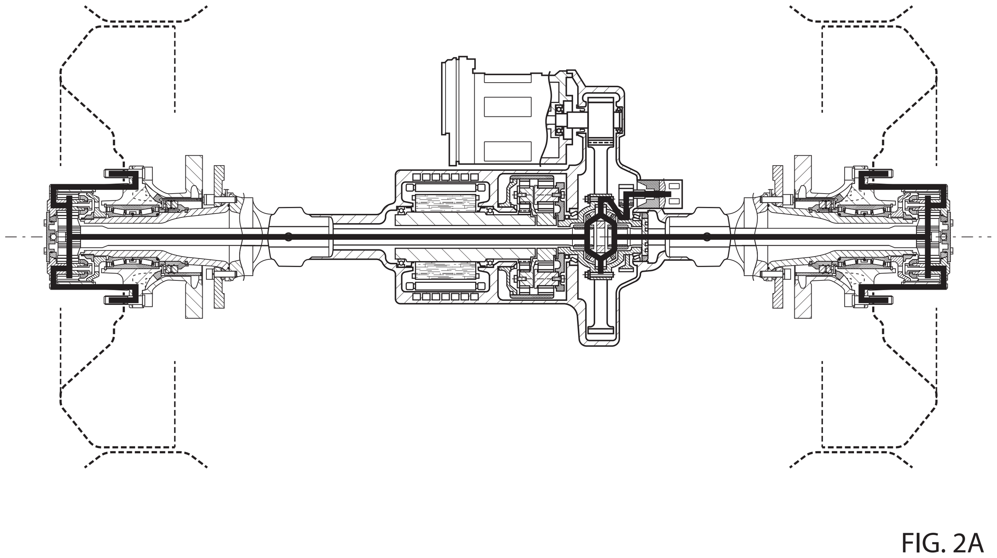

In the second embodiment (figures 2-2A), the traction assembly 1 comprises an auxiliary electric machine 30 configured to directly impart a torque to the differential 10.

In particular, said torque is imparted by means of a gear 31 between an operating shaft of the auxiliary electric machine 30 and the differential 10.

Advantageously, said auxiliary electric machine 30 is housed outside the housing 8 and is smaller than the first and second electric machines M', M".

In the embodiment described herein, the gear wheels are represented as cylindrical with straight teeth or as bevel gear, but they can clearly vary. Further mechanical elements can also be present, but they are not shown in the schematic drawings and are not described for the sake of clarity of representation and brevity.

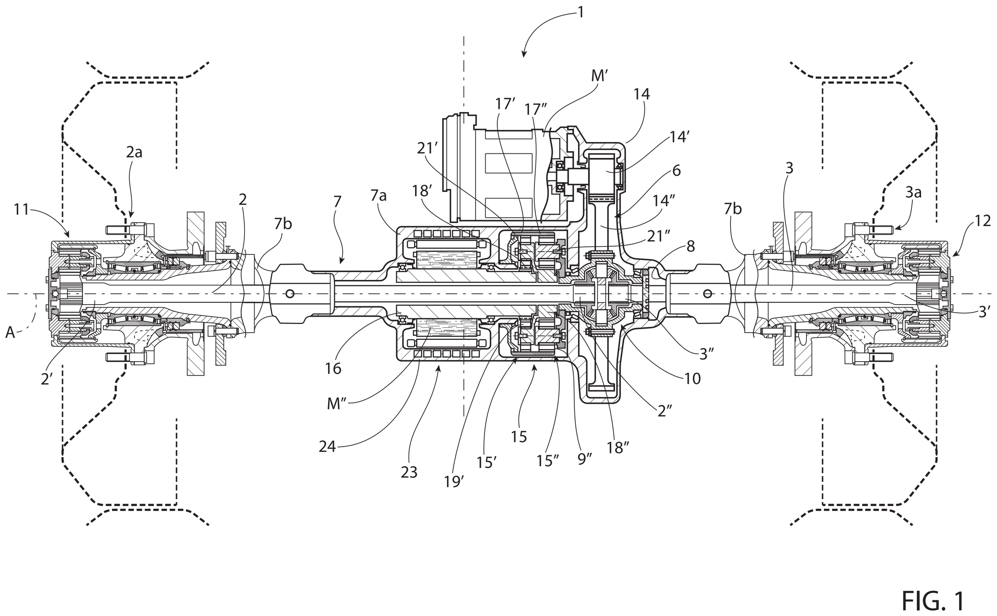

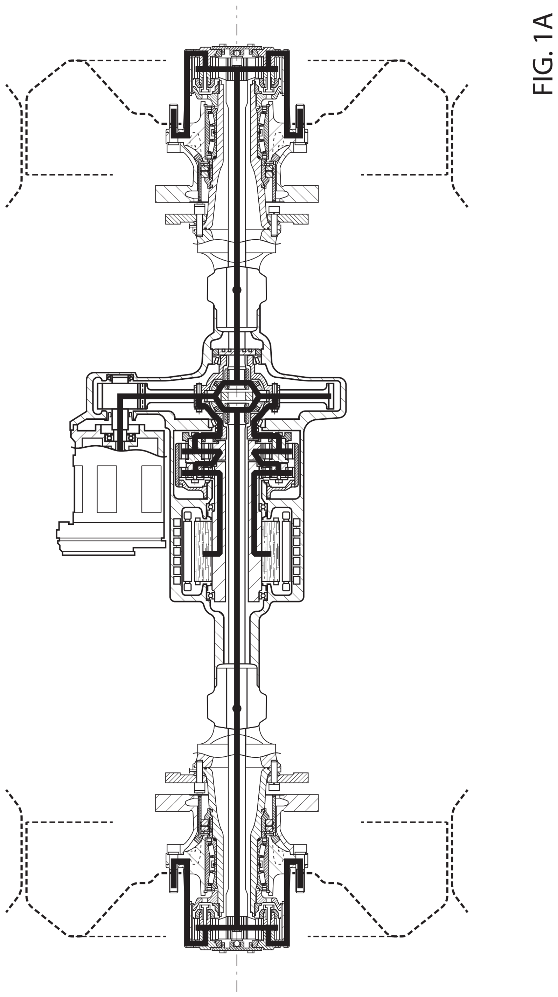

The traction assembly 1 of the invention described above works as follows, with reference to figures 1A - 2A.

In a first operating condition of standard traction (not shown), only the first electric machine M' provides torque to the wheel hubs 2a, 3a. In this configuration, the vehicular electronic unit supplies electrical energy to the first electric machine M', which, through the first branch 14 of the transmission 6, provides torque to the differential 10, which distributes the torque to the wheel hubs 2a, 3a, where it arrives modified by the passage in the gearings 11, 12.

In a second operating condition of "boost" traction, shown in figure 2A, both electric machines M', M' ' provide torque to the respective wheel hubs 2a, 3a. In this configuration, the vehicular electronic unit supplies electrical energy to both electric machines M ', M' ', which provide torque, through the respective first and second branch 14, 15, to the differential 10, which distributes the torque to the wheel hubs 2a, 3a, where it arrives modified by the passage in the gearings 11, 12.

In a third operating condition of standard regenerative braking (not shown), the torque is provided by the wheel hubs 2a, 3a to the drive-shafts, which, through the differential 10, drive the first electric machine M' through the first branch 14, said first electric machine M' generating, thanks to this drive, electrical energy that is stored in the battery assembly, thus braking the vehicle.

In a fourth operating condition of boost regenerative braking (not shown), the torque is provided by the wheel hubs 2a, 3a to the drive-shafts, which, through the differential 10, cause the rotation of both branches of the transmission 14, 15, which respectively drive both the first and the second electric machine M', M". Therefore, both electric machines M', M' 'generate, thanks to the respective drive, electrical energy that is stored in the battery assembly, thus braking the vehicle to a greater extent than the previously described operating condition.

In a fifth operating condition, shown in figure 2A, the auxiliary electric machine 30 provides torque to the respective wheel hubs 2a, 3a. In this configuration, the vehicular electronic unit supplies electrical energy to said auxiliary electric machine 30, which provides torque, through the respective first and second branch 14, 15, to the differential 10.

During the operation of the vehicle, therefore, the electric unit, assessing the need to provide a torque value greater than a predetermined threshold value or having to provide a braking torque value greater than a predetermined threshold value, controls the power supply of the second electric machine M'', permitting or forbidding it, so as to electrically connect or disconnect it from the transmission 6.

In detail, when powered, the second electric machine M'', being asynchronous, can produce torque or generate electrical energy, otherwise the sole rotor portion rotates in an idle manner with respect to the stator part without adding any passive load.

Furthermore, the electric unit, if requested, can activate or not the auxiliary electric machine 30 to provide a reduced torque to move the vehicle at low speed.

From the description above, it is therefore clear that the invention also relates to a method for controlling the operation of a traction assembly of the type described herein, comprising the following steps:
i. Processing, by means of the electronic unit, a required value of driving or braking torque to be imparted by the traction assembly 1;
ii. Verifying whether such driving or braking torque value exceeds a predetermined threshold value;
iii. If such required value of driving or braking torque is lower than the predetermined threshold value, not powering the second electric machine M'' and returning to step i), otherwise continuing to step iv)
iv. Electrically powering the second electric machine M'' and returning to step i).

In particular, the torque processed in step i) can be obtained from a signal imparted through the use of the vehicle's acceleration/braking pedal by the driver or can be calculated automatically as a function of functional parameters of the vehicle and/or data processed by vehicle sensor means acquired by the electronic unit.

Furthermore, the predetermined threshold value is a maximum driving or braking torque value of the first electric machine M', advantageously stored or capable of being acquired by the electronic unit.

Owing to the above, the advantages of a traction assembly and of a vehicle according to the invention are evident.

Thanks to the traction assembly disclosed above, the use of complex selector elements and of corresponding actuator systems is avoided, thus making the transmission more compact, lightweight and easy to assemble and, therefore, more cost-effective.

Indeed, the control of the power supply of the second asynchronous electric machine allows it to be electrically "disconnected", preventing the passive load thereof from being felt by the transmission with consequent loss of efficiency.

As a matter of fact, when the second electric machine is electrically disconnected, the sole rotor part is driven by the transmission 6, hence being substantially negligible.

As also described, thanks to the system and control disclosed herein, it is possible to use one or more electric machines according to the necessary driving or braking loads, further optimizing vehicle efficiency and reducing electrical consumption.

Therefore, the range of the vehicle is increased. Moreover, thanks to the housing inside the space 8, it is possible to provide an asynchronous electric machine of greater dimensions, consequently providing an increased maximum torque value.

Furthermore, thanks to the epicyclic mechanism, in particular of the compound type, the torque provided by the asynchronous electric machine can be further increased, thus making the use of the traction assembly versatile.

Housing such an electric machine inside the space 8 increases the safety thereof and reduces the possibility of dirt entering.

In addition, the integration of the conditioning system makes it possible to condition the electric machine, even if it is integrated inside the space 8.

The presence of the auxiliary electric machine, which is small-sized, makes it possible to use a minimum energy when the vehicle has to be moved at low speeds and by directly acting upon the differential 10.

Finally, the traction assembly and the vehicle according to the invention can be subjected to changes and variants, which, though, do not go beyond the scope of protection set forth in the appended claims.

For example, it is clear that the gear wheels described above, the differential and other types of mechanical connection can be replaced by equivalent devices.

Similarly, the number of electric motors or the shape of the casing can vary or the reduction stage can include several speed ratios.

## Claims

1. Traction assembly (1) for a vehicle, said traction assembly (1) comprising a left and right drive-shaft (2, 3) extending along a longitudinal axis (A) and defining an external end (2', 3') configured to be connected to a wheel hub (2a, 3a) of said vehicle,
said traction assembly (1) comprising at least a first and a second electric machine (M', M''), said first electric machine (M') being a synchronous electric machine and said second electric machine (M") being an asynchronous electric machine,
said traction assembly (1) comprising a casing (7) defining a housing (8) and a transmission (6) housed in said housing (8), said transmission (6) operatively connecting said first and second electric machines (M', M") to said drive-shafts (2, 3),
at least one between said first and second electric machines (M', M") being housed in said housing (8).

2. Traction assembly according to claim 1, wherein said second electric machine (M") is housed in said housing (8).

3. Traction assembly according to claim 1 or 2, wherein said first electric machine (M') is a permanent magnet electric machine and wherein said second electric machine (M") is an induction electric machine.

4. Traction assembly according to one of the preceding claims, wherein said transmission (6) comprises a first and a second branch (14, 15) and a differential mechanism (10), said differential mechanism (10) operatively connecting said half-axles (2, 3), said first and second branch (14, 15) connecting in parallel to each other said first and said second electric machine (M', M") to said differential mechanism (10).

5. Traction assembly according to claim 4, wherein at least one of said branches (14, 15) comprises an epicyclic gearing (15', 15'').

6. Traction assembly according to claim 5, wherein at least one of said branches (14, 15) comprises a parallel shafts gearing.

7. Traction assembly according to any of the claims from 4 to 6, wherein said epicyclic gear (15', 15") comprises a first epicyclic gearing (15') and a second epicyclic gearing (15'') in series with each other.

8. Traction assembly according to claim 7, wherein said first and second epicyclic gearing (15', 15") each comprising a crown (17', 17''), a sun gear (18', 18''), a plurality of satellites (19', 19'') rotatably carried by respective pins (21', 21"), the sun gear (18') of said first differential (15') being driven by said second electric machine (M"), said crown (17', 17") of said first and second epicyclic gearing (15', 15") being rigidly carried by said casing (7), said pins (21') of said satellites (19') of said first epicyclic gear (15') being operatively connected to the sun gear (18") of said second epicyclic gear (15''), said pins (21") of said second epicyclic gear (15") being operatively connected to said differential (10).

9. Traction assembly according to any of the preceding claims, wherein one of said first and second electric machines (M', M") is carried by said casing (7) outside said housing (8).

10. Traction assembly according to any of the claims dependent on claim 4, comprising an auxiliary electric machine (30) directly connected to said differential (10).

11. Traction assembly according to any of the preceding claims, comprising a conditioning system (23) configured to condition a portion of said electric machine (M") housed in said housing (8), said conditioning system (23) being carried by said casing (7).

12. Vehicle comprising a traction assembly (1) according to any of the preceding claims and a battery assembly electrically connected to said first and second electric machines.

13. Vehicle according to claim 12, comprising a gearing (11, 12) connecting a drive-shaft (2, 3) to the respective wheel hub (2a, 3a).

14. Vehicle according to claim 12 or 13, comprising an electronic unit configured to be electrically connected to said first and second electric machines (M', M") to control their operation.

15. Vehicle according to claim 14, wherein said electronic unit comprises processing means configured to define a required traction or braking torque to be imparted by said first and second electric machines (M', M"), said electronic unit controlling the electrical supply of said second electric machine (M") as a function of the required torque value.

16. Method for controlling the operation of a traction system (1) in a vehicle according to claim 14, comprising the following steps:
i. Processing a required value of driving or braking torque to be imparted by said traction assembly (1);
ii. Verifying whether such driving or braking torque value exceeds a predetermined threshold value;
iii. If such required value of driving or braking torque is lower than the predetermined threshold value, do not power said second electric machine (M") and return to step i), otherwise continue to step iv)
iv. Electrically power said second electric machine (M") and return to step i).

17. Method according to claim 15, wherein the torque processed in step i) is obtained from a signal imparted through the use of the vehicle's acceleration/braking pedal by the driver or can be calculated automatically as a function of functional parameters of the vehicle and/or data processed by vehicle sensor means acquired by said electronic unit.
